# EUROPEAN PATENT SPECIFICATION

(11) **EP 4 357 648 B1**
(45) Date of publication and mention of the grant of the patent: **15.07.2026**
(21) Application number: 23152727.6
(22) Date of filing: 20.01.2023
(51) Int. Cl.: F16K 5/06, F16K 27/06

(54) **BALL VALVE, PARTICULARLY FOR USE IN THE AIR-CONDITIONING AND REFRIGERATION SECTORS**
KUGELVENTIL, INSBESONDERE FÜR DEN EINSATZ IN KLIMA- UND KÜHLANLAGEN
SOUPAPE À BILLE, EN PARTICULIER POUR L'UTILISATION DANS LES SECTEURS DE CLIMATISATION ET DE RÉFRIGÉRATION

(30) Priority: 19.10.2022 IT 202200004245 U
(43) Date of publication of application: 24.04.2024
(73) Proprietor: Olab S.r.l., 25030 Torbole Casaglia (Brescia) (IT)
(72) Inventor: BOTTURA, Cesare, 25121 BRESCIA (IT)
(74) Representative: Modiano, Micaela Nadia

(56) References cited:
- CN-A- 113 915 366
- IT-A1- 201900 002 073
- US-A- 3 405 909
- US-A- 3 405 910
- US-B2- 7 690 626

## Description

The present invention relates to a ball valve, particularly for the air-conditioning and refrigeration sectors.

More specifically, the invention relates to a flanged ball valve for the air-conditioning and refrigeration sectors.

As is known, a ball valve is a device used for shutting off branches or parts of a circuit. The function of the valve is to block or allow the flow of fluid to the pipes connected to the valve. There are different types of ball valve and their use is very widespread in many and varied sectors. According to the sector of use, the entry/exit connections and the type of materials used may vary.

In the sector of air-conditioning and refrigeration, the valves used can be of the following types:
- ball valve with welded connections.

This device is composed of a body into which the following are inserted in succession: a sealing berth made of PTFE, an actuation stem provided with sealing gaskets, a perforated ball, and an additional sealing berth.

The components are then sealed inside the valve by screwing a sleeve that, once in abutment on the end of the valve body, presses the ball onto the berths, in so doing generating the ball seal.

By rotating the actuation stem by 90°, the valve can be moved from the closed position to an open condition, i.e. to allow flow, and vice versa.

Conventional valves are usually constituted by a body and a sleeve made of brass and pipes made of copper.

At the ends of the pipes there is a flaring of the diameter which allows the installation technician to insert the copper pipe to be connected to the valve and weld/braze it with weld filler material.

The seal between the body and the sleeve is usually provided using TIG welding (after screwing up to abutment); the actuation stem is sealed with a pair of O-rings made of elastomeric material.

Valves of this type exhibit the following problems, however.

Firstly, in the assembly step at the product manufacturers, there can be a great many discards if the TIG welding process is not kept under control.

In fact, during the sealing between body and sleeve, if the welding parameters are not precise and/or the valve is not correctly cooled by flushing the inside with cold gas, the high temperatures can damage (melt or deform) the sealing berths of the ball and the O-ring sealing of the actuation stem.

If the above mentioned sealing elements are damaged, the seal of the valve is compromised and the valve has to be rejected.

Furthermore, in the assembly step at the site of final installation, the valve could be damaged by the welding/brazing of the connection pipes.

At the time of installation the operator will need to insert a copper pipe to be connected into the pocket present at the ends of the valve.

The operator will then execute the operation to weld the two pipes with weld filler material, usually silver alloy or copper/phosphorus alloy. This operation must be done while enfolding the valve body in a wetted rag so as to keep the component cold and directing the welding torch outward (not in the direction of the valve body).

If the above contrivances are not followed, the result will be the same as described previously, and therefore the valve will be unusable.

Furthermore, during operation this type of valve may over time be susceptible to leaks from TIG welds, in particular when used with R744 gas at high pressure (up to 150 bar or 15 MPa).

In fact TIG welds are tested during production of the valve, but they can have non-visible "blisters" inside which under conditions of high pressure may expand until the weld itself fails, in so doing compromising the seal between body and sleeve.

There are also ball valves with threaded ends, which have the same components as those described previously, but connection to the system is done with female or male threadings.

These valves also have a TIG-welded body and sleeve and they run into the same problems mentioned previously.

By contrast, they do not exhibit problems of overheating when they are being connected by the operator, but since they still have threaded connections it is necessary to take great care in that the threadings, if non correctly isolated using sealants or gaskets, may lead to leaks of coolant gas.

Leakage of coolant gas must be avoided in all these types of valves in any case, since in addition to being expensive the gases used in some cases are highly pollutant. Furthermore, once the gas has exited from an air-conditioning/refrigerating circuit, the functionality of the apparatus is compromised and it is necessary to recharge it.

Document US7690626B2 discloses a known ball valve according to the preamble of claim 1.

The aim of the present invention is to provide a ball valve for use in the air-conditioning and refrigeration sectors, which resolves the drawbacks of conventional valves.

Within this aim, an object of the present invention is to provide a ball valve for use in the air-conditioning and refrigeration sectors, that can prevent leaks between the body and the sleeve of the valve.

Another object of the present invention is to provide a ball valve for the air-conditioning and refrigeration sectors, in which the operation conducted by the end user can be done without directly welding/brazing the connection pipes, and therefore without the risk of overheating and damaging the sealing element of the ball valve.

Another object of the present invention is to provide a ball valve for use in the air-conditioning and refrigeration sectors, wherein the body and the sleeve can be made both of brass and in stainless steel and wherein the sealing gaskets can be provided with differentiated blends according to compatibility with the various refrigerant fluids.

Another object of the present invention is to provide a ball valve that is highly reliable, easily and practically implemented and of low cost.

This aim and these and other objects of the invention are achieved by a ball valve according to claim 1.

Further characteristics and advantages of the invention will become better apparent from the description of a ball valve according to the present invention, which is illustrated for the purposes of non-limiting example in the accompanying drawings wherein:

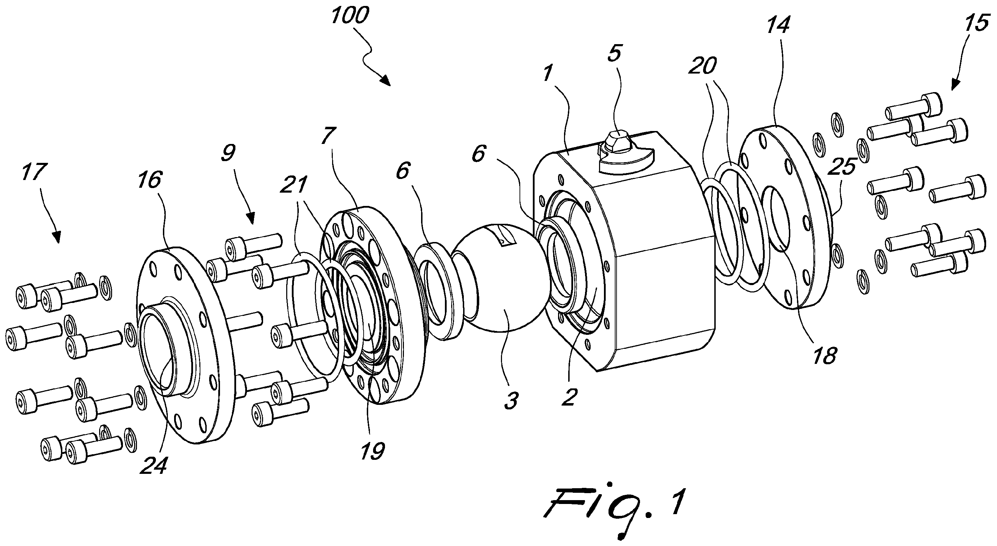

Figure 1 is an exploded perspective view of the ball valve according to the present invention;

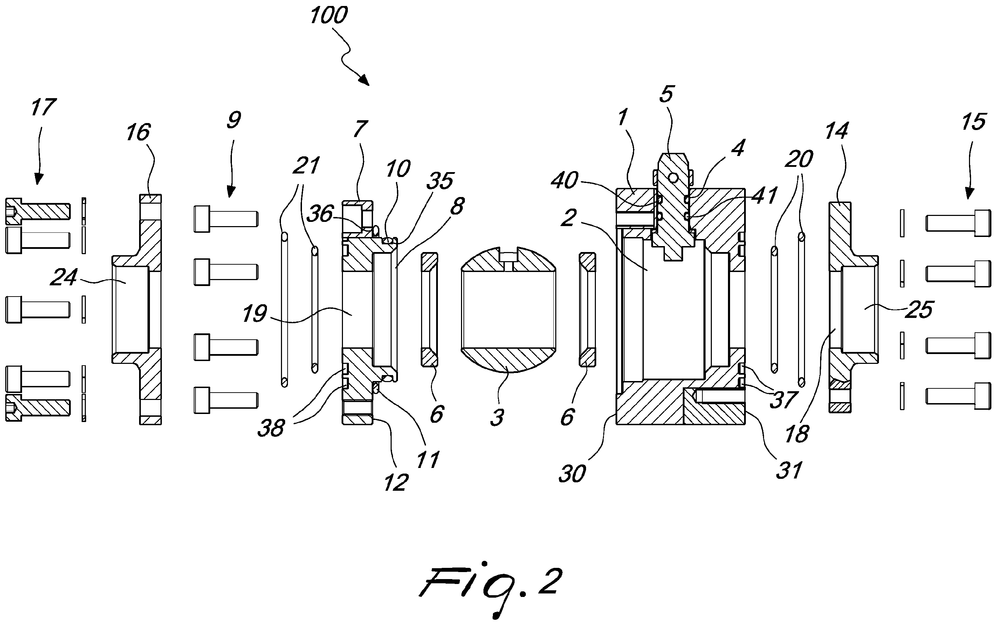

Figure 2 is an exploded cross-sectional view of the ball valve of Figure 1;

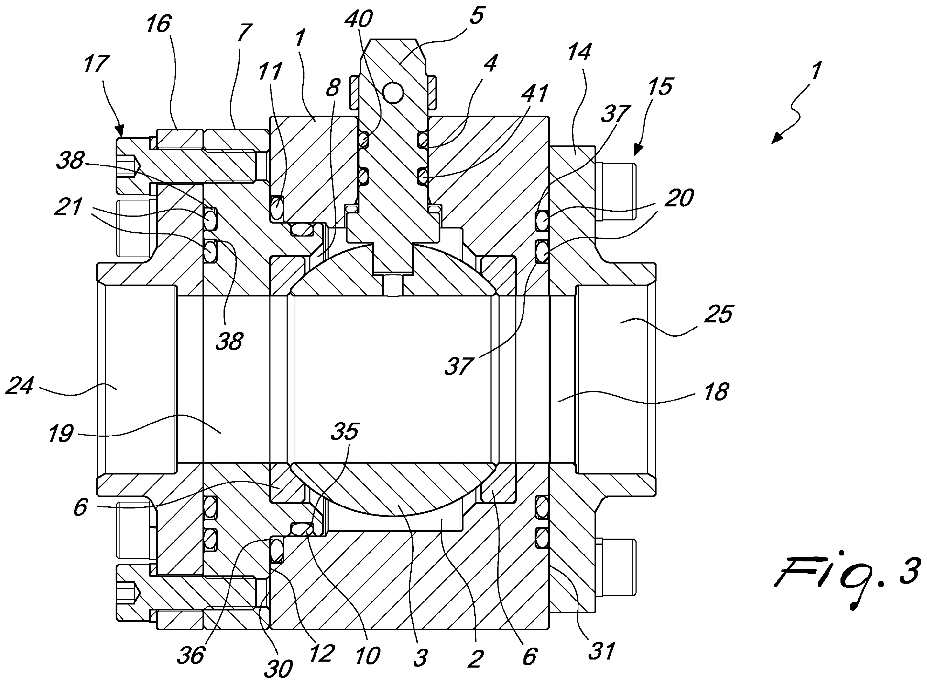

Figure 3 is a transverse cross-sectional view of the ball valve according to the present invention.

With reference to the figures, in which identical reference numerals refer to identical elements, the ball valve according to the present invention, generally designated by the reference numeral 100, comprises a valve body 1 which has a seat 2 inside it for accommodating a ball 3.

Conveniently, the valve body 1 of the valve is furthermore provided, along a vertical axis thereof, with a hole 4 for accommodating an actuation stem or element 5, with the interposition of sealing gaskets 40, 41.

The seat 2 for accommodating the ball 3 further accommodates a sealing berth 6.

The ball 3 is conveniently milled to accommodate the actuation stem 5.

A sleeve 7, provided with a sealing berth 6, is arranged so as to close the seat 2 of the valve body 1.

The berth 6 is accommodated in a seat 8 of the sleeve 7.

A second berth 6 is arranged on the side opposite to the first berth 6, with respect to the ball 3.

The sleeve 7 is fixed to the valve body 1 using screws 9 which are screwed into threaded holes of the valve body 1.

The seal between the valve body 1 and the sleeve 7 is provided by means of a pair of O-rings, one O-ring radial seal 10 and one O-ring face seal 11.

The O-rings 10 and 11 are arranged in adapted seats 35, 36 which are dimensioned so that when the valve is assembled and the surface 12 of the sleeve 7 is in abutment on a surface (flat face) 30 of the valve body 1 facing the sleeve 7, the O-rings 10 and 11 are accommodated in chambers that are closed (during the coupling between the sleeve 7 and the valve body 1).

In this manner, the O-rings 10 and 11 cannot protrude externally from the respective seats 35, 36 as a result of pressure.

The valve body 1 therefore has two mutually opposite flat faces 30 and 31 respectively for coupling with the sleeve 7 and with an external flange 14 which is fixed with screws 15 to the valve body 1.

At the opposite end of the valve body 1, i.e. on the end opposite to the flange 14, there is a second flange 16 which is coupled to the sleeve 7, and is fixed thereto using screws 17.

Both of the flanges 14 and 16 have a radial hole 18 and 19, respectively, which allows the passage of fluid.

The seal of the external flanges 14 and 16 is controlled by a pair of O-rings 20 and 21, one pair for each flange, arranged concentrically and therefore of different diameters.

In this case too, with the flanges assembled, the O-rings 20, 21 are in chambers 37, 38 that are sealed and closed, and they cannot be extruded outward by the pressure to which the valve according to the invention is subjected.

The external flanges 14 and 16, on the opposite side to the side for coupling with the valve body 1 and with the sleeve 7, respectively, have pockets 24 and 25 for a pipe to be welded by an end user.

With the actuation stem open the ball valve allows the flow of coolant through the valve body 1, while when the stem is in the closed position, the ball 3 prevents the flow of fluid because it forms a seal on the berths 6.

The valve must be connected to the air-conditioning or refrigeration system by following the steps.

Firstly the external flanges 14 and 16 must be unscrewed and removed from the valve body 1.

Once the flanges 14 and 16 have been removed, they must be welded to the pipes to be connected. After welding, when the flanges 14 and 16 have cooled, the flanges are reconnected to the valve body 1 using the screws 15 and 17.

Care needs to be taken in this step that the sealing O-rings 20 and 21 are correctly inserted in their dedicated seats.

In substance, the valve body 1 of the ball valve and the sleeve 7 are not welded to each other, but the seal between these two components is controlled by the O-rings 10, 11, which are arranged in accommodation chambers (defined by the seats 35, 36) that are closed so as to prevent the extrusion of the O-rings.

Since TIG welding is not necessary to close the valve, problems of damage to the elastomeric gaskets and to the berths as a consequence of possible overheating of the materials due to welding are avoided.

The absence of TIG welding results in fewer discards as a result of failed seals in production, and therefore drastically reduces the number of units that fail testing.

The lack of welding also ensures that the seal of the product is excellent over time.

In fact, given that there is no TIG welding, there also cannot be any non-visible blisters inside the ball valve that could result in leaks over time owing to the use of the valve according to the invention at high operating pressures (in particular, with refrigerant fluids such as R744).

Furthermore, the valve according to the invention makes it possible to make the welding of the pipes to the valve by the end user less problematic.

This occurs in fact simply by dismounting the flanges 14 and 16.

In fact, while in traditional applications the installation technician has to weld/braze the pipes to the valve while enfolding it in a wetted rag and taking great care not to overheat it, the valve according to the invention makes it possible to weld/braze the pipes to the external flanges 14, 16 which were previously removed, in order to then remount the flanges with the pipes already welded to the valve body.

In this manner, the operation to weld/braze the pipes to the valve body is not problematic in any way and this operation is carried out without any special precaution regarding the overheating of the valve.

Furthermore, the valve can be removed from the plant if the need arises. In fact, when the valve needs to be replaced for any reason, for example because in particular situations the berths become worn out by repeated openings/closings, the replacement operation is very simple in that it is sufficient to remove the external flanges by loosening the connecting screws, extracting the valve body to be replaced, replacing the valve body, and connecting the latter to the external flanges by tightening the screws.

So it is not necessary, as in traditional solutions, to cut the copper or steel pipes that are connected to the valve body and then connect the new valve body by re-welding it to the pipes which, at this point, given that they have been cut, may now be too short for requirements.

In substance, therefore, the external flanges 14, 16 remain always connected to the air-conditioning or refrigeration plant and can be removed from the valve body with simplicity.

The external flanges 14, 16 can be made with female threading or with male threading in order to screw the valve to the plant using connectors (without welding the pipes).

The valve according to the invention can be made of many types of material, all made of brass, all made of steel, or with parts made of brass mixed with parts made of steel, according to requirements.

The valve has, as mentioned, for every possible leak point, a pair of O-rings in order to have a doubly-guaranteed seal of the valve in the immediate lifetime, but especially over the whole lifetime, of the valve itself.

In practice it has been found that the ball valve according to the invention fully achieves the set aim and objects, in that it makes it possible to avoid TIG welds for closing the valve, and it further makes it unnecessary to weld the pipes to the valve, it being possible to remove the flanges and weld the pipes directly to those flanges, before remounting the flanges on the valve body.

This also enables the rapid replacement of the valve body, without needing to cut the pipes that are connected to the valve.

The valve thus conceived is susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A ball valve (100) for use in the air-conditioning and refrigeration sectors, which comprises a ball, a valve body (1) provided with an accommodation seat (2) for the ball (3), a stem (5) being coupled to said ball (3), through said valve body (1), for actuating said ball (3), a sleeve (7) being coupled at one end of said valve body (1), with the interposition of O-rings (10, 11) arranged in seats (35, 36) that are completely closed when said sleeve (7) is coupled to said valve body (1), and further comprising a pair of flanges (14, 16), one of which is adapted to be coupled to the valve body (1) on one side and the other one to said sleeve (7) on the opposite side;
the ball valve being **characterized by**
said flanges (14, 16) being screwed to said valve body (1) and to said sleeve (7), respectively, said flanges (14, 16) being coupled to said valve body (1) and to said sleeve (7) respectively by way of interposition of a pair of O-rings (20, 21), one pair for each flange, accommodated in seats (37, 38) which are completely closed when said flanges (14, 16) are coupled to said valve body (1) and to said sleeve (7), said sleeve (7) being fixed to said valve body (1) using screws (9).

2. The ball valve according to claim 1, **characterized in that** said flanges (14, 16) respectively have a pocket (24, 25) for coupling a pipe.

3. The ball valve according to one or more of the preceding claims, **characterized in that** said flanges (14, 16) allow the coupling of a pipe by way of welding/brazing.

4. The ball valve according to one or more of the preceding claims, **characterized in that** said flanges (14, 16) have a threading for coupling with a pipe or connector by screwing.

5. The ball valve according to one or more of the preceding claims, **characterized in that** said stem (5) has a pair of sealing gaskets (40, 41) between said stem (5) and said valve body (1) when said stem (5) is mounted inside said valve body (1), for actuating said ball (3).

6. The ball valve according to one or more of the preceding claims, **characterized in that** said O-rings (10, 11) interposed between said sleeve (7) and said valve body (1) comprise an O-ring radial seal (10) and an O-ring face seal (11), said O-rings being accommodated in said seats (35, 36) which are completely closed when said sleeve (7) is mounted on said valve body (1).

7. The ball valve according to one or more of the preceding claims, **characterized in that** said valve body (1) comprises a pair of berths (6) which are arranged mutually opposite, one of said berths (6) being accommodated in said sleeve (7).

## Patentansprüche

1. Ein Kugelventil (100) für den Einsatz in Klima- und Kühlanlagen, das Folgendes umfasst: eine Kugel, einen Ventilkörper (1), der mit einem Aufnahmesitz (2) für die Kugel (3) ausgestattet ist; einen Schaft (5), der mit der Kugel (3) durch den Ventilkörper (1) gekoppelt ist, um die Kugel (3) anzutreiben; eine Hülse (7), die an einem Ende des Ventilkörpers (1) gekoppelt ist, mit Anordnung von O-Ringen (10, 11) dazwischen, die in Sitzen (35, 36) angeordnet sind, welche vollständig geschlossen sind, wenn die Hülse (7) mit dem Ventilkörper (1) gekoppelt ist; und das weiter ein Paar von Flanschen (14, 16) umfasst, von denen einer ausgebildet ist, um mit dem Ventilkörper (1) auf einer Seite gekoppelt zu werden, und der andere mit der Hülse (7) auf der gegenüberliegenden Seite;
wobei das Kugelventil **dadurch gekennzeichnet ist, dass**
die Flansche (14, 16) mit dem Ventilkörper (1) beziehungsweise mit der Hülse (7) verschraubt sind, wobei die Flansche (14, 16) mit dem Ventilkörper (1) beziehungsweise mit der Hülse (7) gekoppelt sind durch Anordnung eines Paares von O-Ringen (20, 21) dazwischen, ein Paar für jeden Flansch, aufgenommen in Sitzen (37, 38), die vollständig geschlossen sind, wenn die Flansche (14, 16) mit dem Ventilkörper (1) und mit der Hülse (7) gekoppelt sind, wobei die Hülse (7) an dem Ventilkörper (1) mit Hilfe von Schrauben (9) befestigt ist.

2. Das Kugelventil gemäß Anspruch 1, **dadurch gekennzeichnet, dass** die Flansche (14, 16) jeweils eine Tasche (24, 25) für den Anschluss eines Rohres haben.

3. Das Kugelventil gemäß einem oder mehreren der obigen Ansprüche, **dadurch gekennzeichnet, dass** die Flansche (14, 16) den Anschluss eines Rohrs durch Schweißen/Löten ermöglichen.

4. Das Kugelventil gemäß einem oder mehreren der obigen Ansprüche, **dadurch gekennzeichnet, dass** die Flansche (14, 16) ein Gewinde zur Kopplung mit einem Rohr oder Verbindungselement durch Verschraubung haben.

5. Das Kugelventil gemäß einem oder mehreren der obigen Ansprüche, **dadurch gekennzeichnet, dass** der Schaft (5) ein Paar von Dichtringen (40, 41) zwischen dem Schaft (5) und dem Ventilkörper (1) hat, wenn der Schaft (5) zum Antreiben der Kugel (3) in dem Ventilkörper (1) montiert ist.

6. Das Kugelventil gemäß einem oder mehreren der obigen Ansprüche, **dadurch gekennzeichnet, dass** die O-Ringe (10, 11), die zwischen der Hülse (7) und dem Ventilkörper (1) angeordnet sind, einen Radial-O-Dichtring (10) und eine O-Gleitringdichtung (11) umfassen, wobei die O-Ringe in den Sitzen (35, 36) untergebracht sind, welche vollständig geschlossen sind, wenn die Hülse (7) an dem Ventilkörper (1) montiert ist.

7. Das Kugelventil gemäß einem oder mehreren der obigen Ansprüche, **dadurch gekennzeichnet, dass** der Ventilkörper (1) ein Paar von Widerlagern (6) umfasst, die einander gegenüber angeordnet sind, wobei eines der Widerlager (6) in der Hülse (7) untergebracht ist.

## Revendications

1. Soupape à bille (100) pour utilisation dans les secteurs de la climatisation et de la réfrigération, qui comprend une bille, un corps de soupape (1) muni d'un siège de logement (2) pour la bille (3), une tige (5) étant reliée à ladite bille (3), à travers ledit corps de soupape (1), pour actionner ladite bille (3), un manchon (7) étant couplé à une extrémité dudit corps de soupape (1), avec l'interposition de joints toriques (10, 11) disposés dans des sièges (35, 36) qui sont complètement fermés lorsque ledit manchon (7) est couplé audit corps de soupape (1), et comprenant en outre une paire de brides (14, 16), dont l'une est adaptée pour être couplée au corps de soupape (1) d'un côté et l'autre audit manchon (7) du côté opposé ;
la soupape à bille étant **caractérisée par**
lesdites brides (14, 16) étant vissées respectivement audit corps de soupape (1) et audit manchon (7), lesdites brides (14, 16) étant couplées respectivement audit corps de soupape (1) et audit manchon (7) par l'interposition d'une paire de joints toriques (20, 21), une paire pour chaque bride,
logés dans des sièges (37, 38) qui sont complètement fermés lorsque lesdites brides (14, 16) sont couplées audit corps de soupape (1) et audit manchon (7), ledit manchon (7) étant fixé audit corps de soupape (1) à l'aide de vis (9).

2. Soupape à bille selon la revendication 1, **caractérisée en ce que** lesdites brides (14, 16) comportent respectivement une poche (24, 25) pour le raccordement d'un tuyau.

3. Soupape à bille selon une ou plusieurs des revendications précédentes, **caractérisée en ce que** lesdites brides (14, 16) permettent le raccordement d'un tuyau par soudage/brasage.

4. Soupape à bille selon une ou plusieurs des revendications précédentes, **caractérisée en ce que** lesdites brides (14, 16) comportent un filetage pour le raccordement à un tuyau ou à un raccord par vissage.

5. Soupape à bille selon l'une ou plusieurs des revendications précédentes, **caractérisée en ce que** ladite tige (5) comporte une paire de joints d'étanchéité (40, 41) entre ladite tige (5) et ledit corps de soupape (1) lorsque ladite tige (5) est montée à l'intérieur dudit corps de soupape (1), pour actionner ladite bille (3).

6. Soupape à bille selon l'une ou plusieurs des revendications précédentes, **caractérisée en ce que** lesdits joints toriques (10, 11) interposés entre ledit manchon (7) et ledit corps de soupape (1) comprennent un joint torique radial (10) et un joint torique frontal (11), lesdits joints toriques étant logés dans lesdits sièges (35, 36) qui sont complètement fermés lorsque ledit manchon (7) est monté sur ledit corps de soupape (1).

7. La soupape à bille selon une ou plusieurs des revendications précédentes, **caractérisée en ce que** ledit corps de soupape (1) comprend une paire de sièges (6) qui sont disposés en vis-à-vis l'un de l'autre, l'un desdits sièges (6) étant logé dans ledit manchon (7).
